Europäisches Patentamt

European Patent Office

Office européen des brevets

(11) Numéro de publication: **0 279 250 B1**

## (12) FASCICULE DE BREVET EUROPEEN

(45) Date de publication de fascicule du brevet:
28.08.91

(21) Numéro de dépôt: **88101287.6**

(22) Date de dépôt: **29.01.88**

(51) Int. Cl.⁵: **E01C 7/18**, C04B 26/26,
E01C 11/24

(54) Asphalte à forte rugosité naturelle de surface.

(30) Priorité: **17.02.87 FR 8702021**

(43) Date de publication de la demande:
**24.08.88 Bulletin 88/34**

(45) Mention de la délivrance du brevet:
**28.08.91 Bulletin 91/35**

(84) Etats contractants désignés:
**AT BE CH DE ES GB GR IT LI LU NL SE**

(56) Documents cités:
**DE-A- 1 965 951
FR-A- 1 094 996
US-A- 3 977 891

ROUTE & TRAFIC, vol. 65, no. 12, décembre
1979, pages 454-456, Zürich, CH; M. HETTIN-
GER: "L'asphalte aux granulats de synthèse"

BITUMEN, vol. 37, no. 2, 1975, pages 51-54,
Hamburg, DE; B. STYPULKOWSKI:
"Kupferschlacke in bituminösen Mischungen"**

(73) Titulaire: **SOCIETE DE PAVAGE ET DES AS-
PHALTES DE PARIS SOCIETE ANONYME
DITE:
Route Principale du Port
F-92230 Gennevilliers Hauts-de-Seine(FR)**

(72) Inventeur: **Bernard-Brunel, Gilbert
124 Route de Giverny
F-27200 Vernon Eure(FR)**

(74) Mandataire: **Simonnot, Bernard et al
Cabinet Simonnot 35 rue de Clichy
F-75442 Paris Cédex 09(FR)**

## Description

La présente invention concerne un asphalte à forte rugosité naturelle de surface, plus particulièrement destiné à réaliser des revêtements de voies de circulation à trafic élevé pour améliorer la sécurité des usagers.

On sait que dans le domaine de la voierie, la mise en oeuvre d'asphalte coulé, formulé classiquement à partir de matériaux de masse volumique comprise entre 2,6 et 2,9 g/cm$^3$, conduit à un état de surface naturel manquant de rugosité en raison de la tendance normale des plus gros agrégats à la décantation, par susceptibilité au tassement.

On a cherché à remédier à cet inconvénient en effectuant un traitement de surface consistant à répandre sur l'asphalte encore chaud, du gravillon chaud ou froid. Outre que cette technique est difficile à maîtriser, elle nécessite deux interventions successives, ce qui la rend coûteuse. On a également cherché à obtenir des asphaltes à haute rugosité en introduisant dans leur formulation des gravillons artificiels légers, mais de tels produits se sont avérés incapables de résister au trafic.

Des asphaltes de ce dernier type sont notamment décrits dans le brevet français N° 1 094 996 concernant un procédé pour l'établissement de revêtements antidérapants. Conformément aux dispositions de ce brevet français, l'asphalte est constitué d'ne matière bitumineuse ou mortier ainsi que de gravillons, le mortier comprenant de façon usuelle un mélange de bitume et une charge minérale donnant une densité de l'ordre de 2,2, tandis que les gravillons présentent une masse volumique différente de celle du mortier et choisie volontairement très inférieure à cette dernière, soit de l'ordre de 0,75 à 0,80. Ces corps granuleux sont destinés à rendre la surface du revêtement antidérapante, du fait qu'ils remontent vers ladite surface en raison de leur densité réduite et, à cet effet, ils peuvent être constitués par exemple par des argiles ou des laitiers expansés. Cependant, l'avantage de la densité réduite est détruit par l'inconvénient de la friabilité de ces corps granuleux dont, rapidement, la rugosité disparaît par usure.

La présente invention vise donc à remédier aux inconvénients ci-dessus en fournissant un asphalte à forte rugosité naturelle de surface présentant une excellente résistance au trafic et dont les constituants et la formulation permettent de réaliser un revêtement de voirie en une seule opération. Ce revêtement a l'avantage de présenter à la fois une fonction rugosité antidérapante et une fonction étanchéité du support, d'où son application possible en chaussée de voiries urbaine et routière, en rampes d'accès, en sols industriels, etc...

Conformément à l'invention décrite dans la revendication 1, l'asphalte est normalement constitué d'un mortier et de gravillons, le mortier comprenant un mélange usuel de bitumes et d'une charge ainsi qu'un "sable" constitué par un matériau artificiel ou naturel de granulométrie convenable et d'une masse volumique comprise entre 3 et 5 g/cm$^3$.

Selon cette composition, l'asphalte comprenant un mortier à masse volumique supérieure à celle des gravillons, elle-même de l'ordre de 2,5 à 3, permet à ceux-ci de se trouver en état de flottation en recevant une poussée de bas en haut qui les amène et les maintient à la surface du revêtement en créant ainsi la forte rugosité naturelle.

Bien entendu, conformément à l'invention, les gravillons présentent un coefficient de polissage accéléré suffisant afin de conférer à l'asphalte de bonnes caractéristiques dans le domaine de la résistance au polissage. On peut appliquer par exemple des gravillons provenant du traitement par concassage et broyage de roches dures, ayant une granulométrie de 4/6, 6/10, 10/14 ou 14/18, ou bien une granulométrie faisant appel au mélange de ces quatre fractions granulométriques.

Comme mentionné ci-dessus, le matériau à masse volumique de 3 à 5 g/cm$^3$ présente une granulométrie convenable, à savoir, comprise entre 0,08 et 3 mm. Ce matériau peut être naturel ou artificiel et comprendre ou être avantageusement constitué par une scorie dénommée "vitrite" qui lui confère sa masse volumique élevée.

A titre d'exemple non limitatif, on donne ci-après une formulation d'asphalte à forte rugosité de surface selon l'invention, les parties étant données en poids :

a) mortier
- fraction liant total :  5 à 6 %
  dont bitume de distillation du pétrole brut :  4 à 5 % dont bitume naturel de Trinidad : 1 %
  dont poudre d'asphalte selon maniabilité souhaitée
- fraction minérale

  charge : calcaire ou siliceuse provenant de la moûture de roches calcaires ou siliceuses, de granulométrie inférieure à 80 $\mu$ :  14 à 20 %

  sable : "vitrite", inerte chimiquement :  30 à 40 %

b) gravillon de roches dures :  30 à 45 % Température d'épandage : environ 250° C.

Il est bien entendu que la présente invention n'a été décrite qu'à titre explicatif mais nullement limitatif et qu'on pourra y apporter toute modification utile, notamment dans le domaine des équivalences techniques, sans sortir de son cadre.

## Revendications

1. Asphalte à forte rugosité naturelle de surface, constitué d'un mortier et de gravillons, dans lequel le mortier présente une masse volumique différente de celle des gravillons et comprend un mélange de bitume, une charge et un sable, caractérisé par le fait que ledit mortier comprend comme sable un matériau artificiel ou naturel, de granulométrie convenable et d'une masse volumique comprise entre 3 et 5 g/cm³, lesdits gravillons étant constitués de roche dure et présentant une masse volumique comprise entre 2,5 et 3 g/cm³.

2. Asphalte selon la revendication 1, caractérisé par le fait que ledit matériau est constitué par une scorie inerte chimiquement et que sa granulométrie est comprise entre 0,08 et 3 mm.

3. Asphalte selon la revendication 2, caractérisé par le fait que les gravillons proviennent de concassage et broyage de roches dures, de granulométrie de 4/6, 6/10, 10/14, 14/18 ou d'un mélange de ces fractions granulométriques.

4. Asphalte selon l'une quelconque des revendications 1 à 3, caractérisé par le fait qu'il comprend de 30 à 45 % en poids de gravillons de masse volumique de 2,5 à 3 g/cm³ environ et de 30 à 40 % en poids du matériau à masse volumique comprise entre 3 et 5 g/cm³.

## Claims

1. Asphalt with a strong surface roughness consisting of mortar and chippings, in which the mortar has a different density from that of the chippings and comprises a bitumen mixture, a filler and sand, characterised in that the said mortar comprises as sand an artificial or natural material having an appropriate aggregate grading and a density of between 3 and 5 g/cm³, the said chippings consisting of hard rock and having a density of between 2.5 and 3 g/cm³.

2. Asphalt according to claim 1, characterised in that the said material consists of chemically inert slag and that its aggregate grading is between 0.08 and 3 mm.

3. Asphalt according to claim 2, characterised in that the chippings originate from the crushing and grinding of hard rocks, having an aggregate grading of 4/6, 6/10, 10/14, 14/18 or a mixture of these granulometric fractions.

4. Asphalt according to any one of claims 1 to 3, characterised in that it comprises 30 to 45 % by weight of chippings having a density of approximately 2.5 to 3 g/cm³ and 30 to 40 % by weight of the material having a density of between 3 and 5 g/cm³.

## Patentansprüche

1. Asphalt mit hoher Oberflächenrauhigkeit, bestehend aus einem Mörtel und aus Splitt, in welchem Asphalt der Mörtel eine von der Dichte des Splitts abweichende Dichte besitzt und ein Bitumengemisch, einen Füller und einen Sand umfaßt, dadurch gekennzeichnet, daß der genannte Mörtel als Sand ein künstliches oder natürliches Material passender Körnung und von zwischen 3 und 5 g/cm³ liegender Dichte aufweist, und daß der Splitt aus hartem Gestein besteht und eine Dichte zwischen 2,5 und 3 g/cm³ besitzt.

2. Asphalt nach Anspruch 1, dadurch gekennzeichnet, daß das genannte Material aus einer chemisch neutralen Schlacke besteht, und daß seine Körnung zwischen 0,08 und 3 mm liegt.

3. Asphalt nach Anspruch 2, dadurch gekennzeichnet, daß der Splitt durch Grob- und Feinzerkleinerung harten Gesteins hergestellt ist und eine Körnung von 4/6, 6/10, 10/14, 14/18 aufweist oder eine Mischung dieser Korngrößenbereiche zeigt.

4. Asphalt nach einem der Ansprüche 1 bis 3, dadurch gekennzeichnet, daß er 30 bis 45 Gew.% Splitt mit einer Dichte von ungefähr 2,5 bis 3 g/cm³ und 30 bis 40 Gew.% Material mit einer Dichte zwischen 3 und 5 g/cm³ umfaßt.